# EUROPEAN PATENT APPLICATION

(11) **EP 4 306 665 A1**
(43) Date of publication of application: **17.01.2024**
(21) Application number: 22779591.1
(22) Date of filing: 14.02.2022
(51) Int. Cl.: C21D 9/56, C21D 9/60, C21D 11/00

(54) **CONTINUOUS ANNEALING EQUIPMENT, CONTINUOUS ANNEALING METHOD, COLD-ROLLED STEEL SHEET MANUFACTURING METHOD, AND PLATED STEEL SHEET MANUFACTURING METHOD**

(30) Priority: 30.03.2021 JP 2021057791
(71) Applicant: JFE Steel Corporation, Tokyo 100-0011 (JP)
(72) Inventor: OSUKA Kenichi, Tokyo 100-0011 (JP); WATANABE Maiko, Tokyo 100-0011 (JP); KOMINE Shinsuke, Tokyo 100-0011 (JP); TAKAHASHI Hideyuki, Tokyo 100-0011 (JP)
(74) Representative: Haseltine Lake Kempner LLP
(86) International application number: PCT/JP2022/005756
(87) International publication number: WO 2022/209364

(57) **Abstract**

To provide continuous annealing equipment, a continuous annealing method, a method of producing cold-rolled steel sheets and a method of producing coated or plated steel sheets which enable a quick response to fluctuations in material properties and enable minimization of fluctuations in mechanical properties of products. The continuous annealing equipment is continuous annealing equipment for steel sheets including, in this order, a heating zone (6) and a soaking zone (7), the soaking zone (7) including a first soaking zone (7A) and a second soaking zone (7B) provided after the first soaking zone (7A), the continuous annealing equipment including: a first induction heating device (9) provided between first soaking zone (7A) and a second soaking zone (7B); and a measuring device (10) configured to measure austenite fractions of the steel sheets at an exit of the second soaking zone (7B).

## Description

### TECHNICAL FIELD

The present disclosure relates to continuous annealing equipment, a continuous annealing method, a method of producing cold-rolled steel sheets and a method of producing coated or plated steel sheets. The present disclosure relates in particular to continuous annealing equipment, a continuous annealing method, a method of producing cold-rolled steel sheets and a method of producing coated or plated steel sheets for producing high strength steel sheet for use in automotive structural materials and the like.

### BACKGROUND

In the production of thin steel sheets for automobiles, continuously cast slabs are heavily processed by hot rolling and cold rolling until the slabs reach a final thickness. In subsequent annealing treatment, cold work microstructure recovery, recrystallization, and grain growth, as well as transformation microstructure control, are performed to adjust the balance between strength and workability.

In recent years, continuous annealing furnaces, in which steel sheets are subjected to continuous heating, soaking, and cooling while being conveyed in a strip-like connected manner, have become more commonly used in the annealing treatment. Depending on the application of the steel sheets, hot-dip galvanizing treatment and overaging treatment may be performed after the cooling.

The heating method generally used in an annealing furnace is a Radiant tube burner, which heats metal tubes by gas combustion and indirectly heats steel sheets with radiant heat therefrom. In the production of hot-dip galvanized steel sheets, a direct fired furnace, in which flame from a gas combustion is directly sprayed onto steel sheets to ensure coatability, may be employed in the front section of the furnace. In addition, a pre-heating zone is generally installed before the heating zone, utilizing the exhaust heat of the combusted gas produced by the above-described gas combustion.

Radiant tube furnaces heat steel sheets by radiant heat from the furnace wall, resulting in high thermal inertia. This makes quickly following changes to a set temperature difficult. Furthermore, in the final stage of heating, the rate at which the temperature of the steel sheet rises is slower, and a constant soaking time is necessary for microstructure control, which increases the required furnace length and further increases thermal inertia, resulting in a greater delay in following a target temperature. As a result, in a process of continuously treating a coil, the temperature of some of the steel sheets may exceed a predetermined annealing temperature range, which can cause problems such as reduced yield due to variations in mechanical properties and reduced productivity due to changes in line speed because of temperature control.

In response to the problem as described above, JP H11-61277 A (PTL 1) describes a technology of improving responsiveness by installing an induction heating device between a pre-heating zone and a heating zone (direct fired furnace) or in the middle of a heating zone composed of multiple direct fired furnaces to supplement the heating capacity. JP 2000-144262 A (PTL 2) describes a technique of slow heating from 650 °C or more to 750 °C or less and then rapid heating to a maximum arrival temperature of 750 °C or more to 910 °C or less. JP H10-152728 A (PTL3) describes stabilizing variations in mechanical properties due to fluctuations in steel composition and hot-rolling conditions by varying a maximum arrival temperature in the longitudinal direction of a steel sheet by means of a recrystallization and grain growth model.

### CITATION LIST

### Patent Literature

PTL 1: JP HI 1-61277 A
PTL 2: JP 2000-144262 A
PTL 3: JP H10-152728 A

### SUMMARY

### (Technical Problem)

The technology of PTL 1 requires that a steel sheet temperature at an exit of a direct fired furnace be low to prevent excessive oxidation of the steel sheet surface and that even a radiant tube furnace be used for heating. Therefore, shortening the furnace length is difficult, and the effect of changing the furnace temperature setting is widespread. Furthermore, PTL1 claims that the effects of furnace temperature fluctuations can be absorbed by quickly controlling an output of the induction heating device, but the direct-fired heating furnace following the induction heating device focuses on controlling the oxidation of steel sheets, making flexibly controlling the steel sheet temperature difficult. Therefore, the technology of PTL1 cannot sufficiently demonstrate an effectiveness at absorbing the effects of furnace temperature fluctuations.

The technology of PTL 2 focuses on Interstitial Free steel (IF steel) and controls the maximum arrival temperature by rapid heating using an induction heating device or electrical resistance heating device before soaking, such that material variations predicted from results of the previous process are absorbed by grain size changes in α-recrystallized grains after annealing. However, with recent demand for higher strength products, the production of Dual Phase steel (DP steel) has been increasing. It is necessary for the DP steel to transform from the α phase to the γ phase during annealing and for the DP steel to be heated in an annealing furnace to the maximum arrival temperature at the Ai transformation temperature or more and less than the A₃ transformation temperature to control the fractions of the α phase and γ phase with the end-point temperature thereof. Therefore, if the DP steel is heated rapidly after slow heating to a soaking temperature, i.e., the maximum arrival temperature as in the technology of PTL 2, the α-phase transforms rapidly to the γ-phase while the crystal grain size remains fine, making the targeted phase fraction uncontrollable.

The technology of PTL 3 heats a steel sheet to a recrystallization region, then briefly maintains the steel sheet in that region to allow recrystallization to sufficiently progress, and then heats the steel sheet again to a target annealing temperature by rapid heating. This technique enables the prevention of a rapid transformation of crystal grains from the α-phase to the γ-phase due to rapid heating and, in principle, control of the phase fraction by controlling the maximum arrival temperature. However, in the actual production process, controlling the phase fraction simply by the steel sheet temperature is difficult because transformation behavior varies depending on the chemical composition of the material, making the material variation in each product uncontrollable.

In view of the above-described problems, it would be helpful to provide continuous annealing equipment, a continuous annealing method, a method of producing cold-rolled steel sheets and a method of producing coated or plated steel sheets which enable a quick response to fluctuations in material properties and enable minimization of fluctuations in mechanical properties of products.

### (Solution to Problem)

Continuous annealing equipment according to one of the embodiments of the present disclosure is continuous annealing equipment for steel sheets comprising a heating zone and a soaking zone in order of the heating zone and the soaking zone,
the soaking zone including a first soaking zone and a second soaking zone provided after the first soaking zone,
the continuous annealing equipment comprising:
   a first induction heating device provided between the first soaking zone and the second soaking zone; and
   a measuring device configured to measure austenite fractions of the steel sheets at an exit of the second soaking zone.

A continuous annealing method according to one of the embodiments of the present disclosure is a continuous annealing method performed with continuous annealing equipment for steel sheets comprising a heating zone and a soaking zone in order of the heating zone and the soaking zone,
the soaking zone including a first soaking zone and a second soaking zone provided after the first soaking zone,
the continuous annealing equipment comprising: a first induction heating device provided between the first soaking zone and the second soaking zone; and a measuring device configured to measure austenite fractions of the steel sheets at an exit of the second soaking zone,
wherein the continuous annealing method comprises a step of adjusting an output of the first induction heating device and adjusting a furnace temperature of the second soaking zone based on the austenite fractions of the steel sheets measured by the measuring device.

A continuous annealing method according to one of the embodiments of the present disclosure is a continuous annealing method performed with continuous annealing equipment for steel sheets comprising a heating zone and a soaking zone in order of the heating zone and the soaking zone,
the soaking zone including a first soaking zone and a second soaking zone provided after the first soaking zone,
the continuous annealing equipment comprising: a first induction heating device provided between the first soaking zone and the second soaking zone; and a measuring device configured to measure austenite fractions of the steel sheets at an exit of the second soaking zone,
wherein the continuous annealing method comprises a step of heating the steel sheets in the heating zone so that a temperature of each of the steel sheets increases in a temperature range lower than an Ai transformation temperature,
a step of maintaining the temperature of each of the steel sheets in a temperature range lower than the Ai transformation temperature at the first soaking zone,
the step of heating in the first induction heating device by 10 °C/s or more and 200 °C/s or less such that the temperature of each of the steel sheets is included in a temperature range of the Ai transformation temperature or more and less than an A₃ transformation temperature, and
a step of maintaining the temperature of each of the steel sheets in the second soaking zone in a temperature range of the Ai transformation temperature or more and less than the A₃ transformation temperature.

A method of producing cold-rolled steel sheets according to one of the embodiments of the present disclosure,
wherein the above-described continuous annealing method anneals the steel sheets which are cold-rolled steel sheets.

A method of producing coated or plated steel sheets according to one of the embodiments of the present disclosure,
wherein a coating or plating treatment is applied to surfaces of the steel sheets annealed by the above-described method of producing cold-rolled steel sheets, and
the coating or plating treatment is electrogalvanizing, hot dip galvanizing treatment, or galvannealing.

### (Advantageous Effect)

The present disclosure provides continuous annealing equipment, a continuous annealing method, a method of producing cold-rolled steel sheets and a method of producing coated or plated steel sheets which enable a quick response to fluctuations in material properties and enable minimization of fluctuations in mechanical properties of products. Therefore, thin steel sheets and other products may be produced with targeted mechanical properties more consistently than with conventional annealing furnaces.

### BRIEF DESCRIPTION OF THE DRAWINGS

In the accompanying drawings:
FIG. 1 is a schematic diagram of a hot-dip galvanizing process with the continuous annealing equipment according to one of the disclosed embodiments.
FIG. 2 is a diagram illustrating a case of temperature hysteresis of a steel sheet.
FIG. 3 is a flowchart illustrating a case of the continuous annealing method.

### DETAILED DESCRIPTION

The following describes, with reference to figures, the continuous annealing equipment, the continuous annealing method, the method of producing cold-rolled steel sheets and the method of producing coated or plated steel sheets according to one of the embodiments of the present disclosure.

### <Equipment configuration>

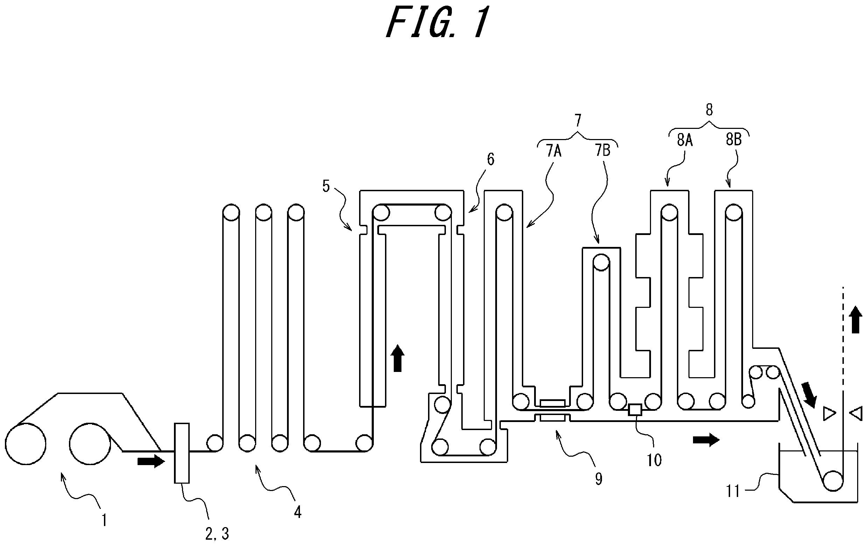

FIG. 1 illustrates a part of the hot-dip galvanizing process with the continuous annealing equipment according to the embodiments of the present disclosure. In the embodiments of the present disclosure, the steel material produced using the hot-dip galvanizing process are thin steel sheets. The steel material produced may also be cold-rolled steel sheets. The arrows in FIG. 1 indicate the direction of line progression. Herein, the upstream side in this direction of travel may be described as "before" and the downstream side as "after". The continuous annealing equipment comprises a payoff reel 1, a welder 2, an electrolytic cleaning device 3, an entry-side looper 4, a pre-heating zone 5, a heating zone 6, a soaking zone 7, and a cooling zone 8. The continuous annealing equipment comprises a first induction heating device 9 (Induction Heating device, may be referred to hereinafter as "IH") and a transformation rate meter 10. As illustrated in FIG. 1, the soaking zone 7 includes a first soaking zone 7A and a second soaking zone 7B. In the embodiments of the present disclosure, the cooling zone 8 includes a first cooling zone 8A and a second cooling zone 8B. The continuous annealing equipment may further comprise a later-described second induction heating device. The continuous annealing equipment may further comprise a galvanizing tank (zinc pot 11) into which thin steel sheets cooled to a predetermined temperature are dipped, an alloying zone, a holding zone, a final cooling zone, temper rolling equipment, a delivery-side looper, a tension reel, etc.

Thin steel sheets coiled in a previous process are unwound onto the payoff reel 1. The unwound thin steel sheet enters the pre-heating zone 5 of an annealing furnace. The continuous annealing equipment comprises, in this order, the pre-heating zone 5 followed by the heating zone 6, the first soaking zone 7A, the first induction heating device 9, and the second soaking zone 7B. The continuous annealing equipment also comprises the transformation rate meter 10 after the second soaking zone 7B. The transformation rate meter 10 is a case of a measurement device that measures the austenite fraction (γ-phase fraction) of a steel sheet. Here, a second induction heating device may be provided before the transformation rate meter 10.

The continuous annealing equipment further comprises a mechanism that uses the measurement results of the (γ-phase fraction of the transformation rate meter 10 to adjust an output of the first induction heating device 9 and the furnace temperature of the second soaking zone 7B.

### <Component Details>

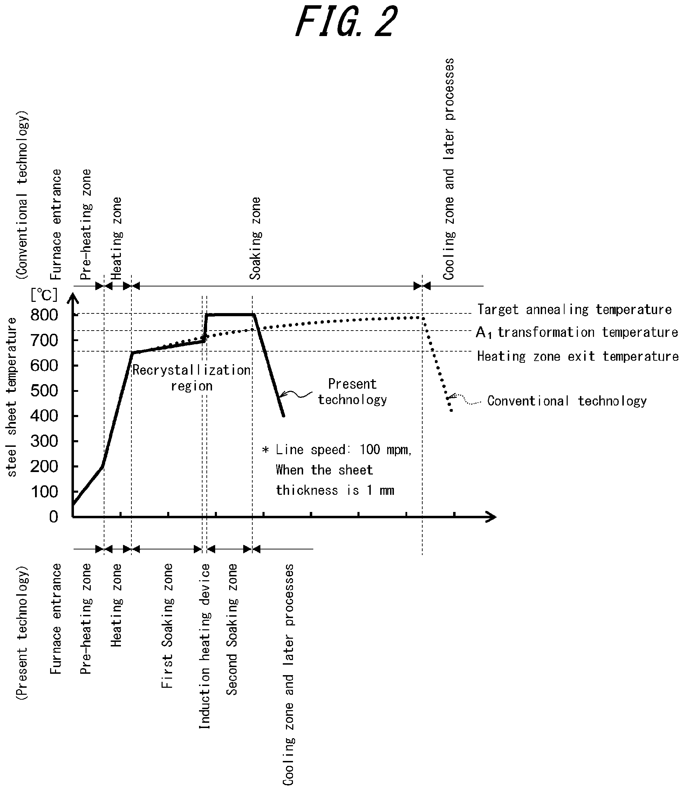

FIG. 2 illustrates the temperature hysteresis of a steel sheet when annealed in a general annealing furnace, which is conventional technology, and when annealed in the annealing furnace in the embodiments of the present disclosure. The vertical axis represents temperature. The horizontal axis represents time. The line speed is 100 mpm. The sheet thickness of the steel sheet is 1 mm. The temperature hysteresis in the embodiments of the present disclosure are indicated by a solid line, and the corresponding process is described below. The temperature hysteresis of conventional technology is indicated by a dotted line, and the corresponding process is described above. As illustrated in FIG. 2, the annealing furnace in the embodiments of the present disclosure requires less time for the process compared to conventional technology due to the configuration described below.

### (Pre-heating zone)

Thin steel sheets are discharged from the payoff reel 1 at a temperature from room temperature to about 100 °C and first enter the pre-heating zone 5, where they are heated to about 200 °C. The temperature of the steel sheets may be simply increased by heating. In the embodiments of the present disclosure, the pre-heating zone 5 uses high-temperature exhaust air produced in the heating zone 6.

### (Heating zone)

The steel sheet then enters the heating zone 6, where the steel sheet temperature is heated to about 600 °C to 700 °C. The temperature of the steel sheets may be simply increased by heating. In the embodiments of the present disclosure, the heating zone 6 uses a direct fired furnace means to heat the steel sheet to a certain level in a short time and to control the surface sate. In addition to the high heating capacity and small furnace volume, the direct fired furnace enables the redox reaction on the steel sheet surface to be flexibly controlled in consideration of the subsequent coating or plating process.

### (First soaking zone)

The first soaking zone 7A is responsible for progressing the recrystallization of the α-phase. In the embodiments of the present disclosure, the first soaking zone 7A controls the furnace temperature in a range of about 700 °C to 800 °C and maintains the furnace temperature such that the temperature of the steel sheet is in a temperature range lower than the Ai transformation temperature (about 600 °C to 730 °C). Here, the Ai transformation temperature is the temperature at which austenite transformation occurs, and as a case, the set furnace temperature is 730 °C. In other words, the austenite phase begins to develop at the Ai transformation temperature or more. In the embodiments of the present disclosure, radiation heating (radiant tube heating) using gas combustion is used as the heating method for the first soaking zone 7A because of a high efficiency and uniform heating of radiant tube heating.

Here, if the temperature of the steel sheet is less than 600 °C in the first soaking zone 7A, recrystallization of the α-phase does not progress, and sufficient workability is unobtainable. On the other hand, if the temperature of the steel sheet is at the Ai transformation temperature (750 °C) or more in the first soaking zone 7A, the α-recrystallized grains become coarse, and the strength of the steel sheet is insufficient. The Ai transformation temperature and a later-described A₃ transformation temperature may vary slightly depending on the composition of the steel sheet, and thus so measuring or calculating them in advance is preferable.

If a residence time of the steel sheet in the first soaking zone 7A is too short, progression of α-phase recrystallization is insufficient, and if the residence time of the steel sheet is too long, crystal grains become coarse and mechanical properties deteriorate. Therefore, the present inventors investigated an optimal residence time in advance through experimentation and found that an optimal residence time of about 20 seconds to 60 seconds is necessary. If the residence time is less than 20 seconds, the progression of the α-phase recrystallization is insufficient, resulting in poor workability, and if the residence time exceeds 60 seconds, partially coarse crystal grains are generated, resulting in non-uniform strength.

Here, a transport speed (line speed) of steel sheets in the hot-dip galvanizing process with the continuous annealing equipment is generally 50 mpm to 150 mpm. Taking this into consideration, a line length of 40 m to 60 m for the first soaking zone 7A is desirable to satisfy the above-described soaking conditions.

### (First induction heating device)

Next, the first induction heating device 9 rapidly heats the steel sheets by adjusting the output such that the temperature of the steel sheets falls within a temperature range of the Ai transformation temperature or more and less than the A₃ transformation temperature (about 750 °C to 900 °C). The A₃ transformation temperature is the upper limit temperature at which the γ-phase fraction can be suppressed. A purpose of this process is to uniformly heat the entire steel sheet to the Ai transformation temperature or more in a short time, and the process also contributes to minimizing the entire equipment. Variations in the progression of γ-phase transformation will cause variations in the mechanical properties of the final product. The first induction heating device 9 may heat by 10 °C/s or more and 200 °C/s or less. If the temperature is less than 10 °C/s, the α-grains coarsen, and if the temperature is more than 200 °C/s, localized high-temperature areas may occur in the width direction, and uniformity is not maintainable. The first induction heating device 9 preferably heats at a rate of 20 °C/s or more. The first induction heating device 9 preferably heats at a rate of 100 °C/s or less. If the heating rate is 20 °C/s or more, the line length can be shorter, and if the heating rate is 100 °C/s or less, the risk of buckling deformation of the steel sheet due to thermal stress can be further reduced. In the embodiments of the present disclosure, the first induction heating device 9 is used as a means of rapid heating in terms of high heating capacity and fast responsiveness to temperature control. When heating in such a temperature range, the first induction heating device 9 is desirably a transverse type because transverse types exceed the Curie point where the magnetism of the steel sheet changes. When the first induction heating device 9 is a transverse type, the output is induction heating by magnetic flux.

If the temperature of the steel sheet heated by the first induction heating device 9 is lower than the Ai transformation temperature (less than 730 °C), the temperature of the steel sheet only promotes recrystallization or grain growth of the α-phase and does not eliminate variations in mechanical properties. If the temperature of the steel sheet heated by the first induction heating device 9 is at the A₃ transformation temperature or more (900 °C or more), controlling the γ-phase fraction is difficult, and the workability of the final product is reduced.

The first induction heating device 9 comprises a higher heating capacity and higher heating rate than the radiation heating, but a large input power is necessary for rapid heating, which requires large-capacity power receiving equipment. Therefore, a feasible scale of equipment combining heating capacity and equipment cost desirably has an equipment length of 5 m or more. The equipment length is desirably 10 m or less. The heating time is desirably 2 seconds or more. The heating time is desirably 10 seconds or less. The heating rate is desirably 20 °C/s or more. The heating rate is desirably 100 °C/s or less.

### (Second soaking zone)

After rapid heating, the steel sheet is held soaking in the second soaking zone 7B until a targeted γ-phase fraction is reached. In the embodiments of the present disclosure, radiant tube heating is used as the heating method for the second soaking zone 7B, as is the case with the first soaking zone 7A. The second soaking zone 7B controls the furnace temperature to around 800 °C to 950 °C, which is near the target annealing temperature. If the temperature is less than 800 °C, the transformation to the γ-phase is slow and the α-phase partially remains, resulting in insufficient strength. If the temperature exceeds 950 °C, controlling the γ-phase fraction is difficult, and the workability of the final product is poor. On the other hand, heating at the Ai transformation temperature or more causes a transformation from the α-phase to the γ-phase, but when heated rapidly, the metallic microstructure immediately after heating did not reach equilibrium. Therefore, it is necessary to control the γ-phase fraction by allowing the transformation to proceed during subsequent retention. When the present inventors examined a residence time capable of obtaining a sufficient γ-phase fraction, the present inventors found that a residence time of about 20 seconds to 50 seconds is necessary. If the residence time is less than 20 seconds, γ-phase transformation is insufficient, resulting in insufficient strength. If the residence time exceeds 50 seconds, the material does not form two phases, the α-phase and the γ-phase, after cooling, but becomes a martensitic single-phase after cooling, resulting in insufficient workability. Here, the residence time is difficult to use as a control parameter because the residence time is determined by equipment length and line speed. Therefore, in actual operation, when controlling the temperature reached by induction heating, the furnace temperature may be lowered to slow the progress of transformation when the γ-phase fraction is excessively large, and the furnace temperature may be raised to accelerate the progress of transformation when the fraction is excessively small.

To achieve this annealing condition, a line length of the second soaking zone 7B is preferably 30 m or more considering the typical sheet passing speed. The line length of the second soaking zone 7B is preferably 50 m or less.

### (Transformation rate meter)

The transformation rate meter 10, which measures the γ-phase fraction of the steel sheet, is located at the exit of the second soaking zone 7B, and phase fractions (transformation rates) of the α phase and γ phase of the steel sheet are measured immediately before entering subsequent processes in the cooling zone 8 and galvanizing tank, etc. The transformation rate meter 10 is provided for a purpose of adjusting the output of the first induction heating device 9 and the temperature of the second soaking zone 7B based on the measured γ-phase fraction. Such adjustments can be used to obtain stable mechanical properties of steel sheets.

The method of measuring the transformation rate is not particularly limited, but a method based on X-ray diffraction is suitable because measurements can be made on-line and are contactless. Due to the difference in crystal structure, the γ-phase and α-phase generate diffraction peaks at different angles when the steel sheet is irradiated with X-rays. The γ-phase fraction is quantified by a diffraction peak intensity. Commercially available products include, for example, X-CAP (X-ray controlled annealing process) manufactured by SMS group GMBH. The austenite fraction may be measured using a magnetic detector, i.e., a device for measuring a magnetic transformation rate of a steel strip, which comprises a driving coil that generates a magnetic field and a detection coil that measures the magnetic field that passes through the steel strip. Specifically, the device described in JP 2019-7907 A can be used.

### (Second induction heater)

A second induction heating device may be further provided between the second soaking zone 7B and the transformation rate meter 10. The presence of the second induction heating device in this position allows for more flexible control based on the transformation rate, reflecting the measurement results of the transformation rate meter 10 without further delay, and further stabilizes the mechanical properties of the final product. The second induction heating device reduces the load to be controlled (temperature regulated) by the furnace temperature of the second soaking zone 7B. In other words, temperature adjustments based on the measurement results of the transformation rate meter 10 can be performed in the second induction heating device as well as in the second soaking zone 7B. This supplementary use of a second induction heating device also prevents sheet thickness fluctuations at coil joints and delays in temperature control when changing annealing conditions. However, the installation of a second induction heating device in the continuous annealing equipment is not necessary as long as at least the first induction heating device 9 is provided.

### (Cooling zone)

The cooling zone 8 is equipment that cools steel sheets to a predetermined temperature. Gas jet cooling, roll-chilling, and water cooling (water quenching) are used as cooling means. As in the embodiments of the present disclosure, the cooling zone 8 may be divided into multiple cooling zones, such as the first cooling zone 8A and the second cooling zone 8B, and the thermal hysteresis of the steel sheet during cooling may be controlled by combining different cooling means or changing the cooling conditions of the same type of cooling means.

### (Hot-dip galvanizing bath)

The cooling zone 8 may be followed by a hot dip galvanizing bath to apply hot dip galvanizing to steel sheets discharged from the cooling zone 8. Hot dip galvanizing may be performed according to conventional methods, and snouts, bath rollers, etc. may be optionally provided.

### (Alloying line)

Alloying treatment equipment may be provided following the hot dip galvanizing bath. In the alloying treatment equipment, steel sheets are heated and alloyed. The alloying treatment may be performed according to conventional methods.

### (Other equipment)

Alloying equipment may be followed by a holding zone, a cooling zone, temper rolling equipment, a straightening machine, a delivery-side looper, a tension reel, etc. to improve final product quality and production stability and efficiency. This equipment may be provided and used according to the quality required of the product and are not particularly limited.

### <Operating Methods (Control Methods)>

In the embodiments of the present disclosure, the optimal range of y-phase fraction for each product is known in advance to establish a transformation rate control model, and the output of the first induction heating device 9 and the furnace temperature of the second soaking zone 7B are controlled so that the γ-phase fraction measured by the transformation rate meter 10 is within the target range. This enables products with very stable mechanical properties to be more reliably produced. Although the transformation rate control model is established for each product, the strength grade is used as a factor to classify the products in the embodiments of the present disclosure. Factors that classify a product are not limited to the strength grade. For example, the transformation rate control model may be established for each product by classifying products according to required product properties, such as steel sample, mechanical properties other than strength, and surface properties.

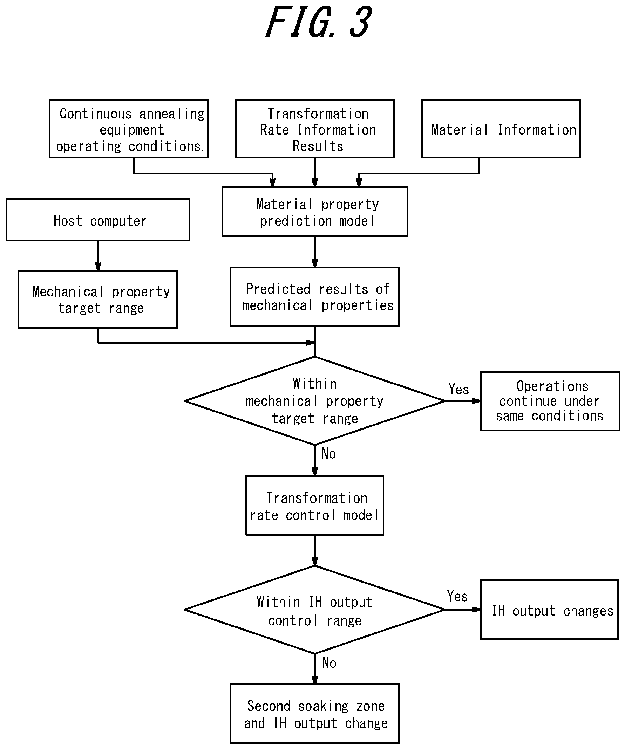

FIG. 3 is a flowchart illustrating a case of the continuous annealing method performed with the above-described continuous annealing equipment in the embodiments of the present disclosure.

A material property prediction model is created based on the results of the γ-phase fraction measurement using the transformation rate meter 10 in the annealing furnace ("Transformation Rate Information Results" in FIG. 3), information on the chemical composition obtained when the material in question is cast ("Material Information" in FIG. 3), and the current operating conditions of the continuous annealing equipment (especially the operating conditions of the cooling zone 8). The material property prediction model is then used to predict the mechanical properties of the finally obtained product. In this case, the material property prediction model used may be a physical model obtained by off-line laboratory experiments or numerical analysis, as well as a machine learning model obtained from accumulated production experience.

Next, whether the predicted mechanical properties ("Predicted results of mechanical properties" in FIG. 3) fall within the target range of mechanical properties acceptable for the product in question is determined. The target range of mechanical properties is given by a host computer. The host computer provides production information, etc. to the process computer that controls the operation of the continuous annealing equipment. If the continuous annealing equipment is within the target range (Yes for "Within mechanical property target range" in FIG. 3), the continuous annealing equipment continues to operate under the current conditions. If the continuous annealing equipment is outside the target range (No for "Within mechanical property target range" in FIG. 3), the operating conditions are changed. When changing the operating conditions, the transformation rate control model is used to determine the amount of adjustment of the γ-phase fraction necessary to keep the material property from the above-described material property prediction model within the target range, and to determine the amount of steel sheet temperature control for achieving that amount of adjustment of the transformation rate. The transformation rate control model used may be a physical model obtained by off-line laboratory experiments or numerical analysis, as well as a machine learning model obtained from accumulated production experience.

When the continuous annealing equipment determines that the required temperature control range is within the range controllable by the first induction heating device 9 (Yes for "Within IH output control range" in FIG. 3), the output of the first induction heating device 9 is changed. When the continuous annealing equipment determines that the required temperature control range is outside the range controllable by the first induction heating device 9 (No for "Within IH output control range" in FIG. 3), the output of the first induction heating device 9 and the furnace temperature of the second soaking zone 7B both change together. While the furnace temperature of the second soaking zone 7B is changing, the output of the first induction heating device 9 and the furnace temperature of the second soaking zone 7B can be controlled according to the above-described control flow to minimize the amount by which the mechanical properties of the product deviate from the target. In other words, the continuous annealing equipment enables a quick response to fluctuations in material properties and enable minimization of fluctuations in mechanical properties of products.

Here, even in conventional continuous annealing equipment, it is possible to try to control the transformation rate by installing the transformation rate meter 10 and controlling the sheet temperature with high precision. However, according to the equipment specifications of just a conventional radiation-heated annealing furnace, heating takes a long time (e.g., about 100 seconds to 200 seconds), and the furnace volume is very large (e.g., line length 150 m to 250 m). Therefore, not only is the responsiveness of the furnace temperature to control commands very poor, but the steel sheet length affected by furnace temperature changes is also longer, making it impossible to finely control the steel sheet temperature. On the other hand, according to the present disclosure, not only can the steel sheet temperature be quickly controlled by the first induction heating device 9, but also the furnace length of the soaking zone 7 can be shortened (e.g., 70 m to 110 m), resulting in high responsiveness of the furnace temperature. As a result, it is possible to quickly reflect changes in heating conditions not only in response to material-induced changes in transformation behavior, but also when annealing conditions change at product joints. The range of deviations from the targeted annealing conditions can be reduced, resulting in a much higher yield rate.

Steel sheets may be subjected, with continuous annealing equipment, to annealing treatment followed by coating or plating treatment, alloying treatment, temper rolling, and shape straightening treatment. Coating or plating treatment and alloying treatment may be performed by conventional methods to satisfy required qualities in the surface properties of the product and are not particularly limited.

If a shape disorder occurs, the steel sheet may be corrected by continuing to pass the steel sheet through temper rolling and a straightening machine. The temper rolling and adjusting may be performed under conditions that do not affect the mechanical properties of the steel sheet but only correct the shape of the steel sheet and are not limited to such conditions.

### EXAMPLES

### (Examples)

Tables 1 and 2 list the conditions used to produce thin steel sheets and results when using conventional continuous annealing equipment and continuous annealing equipment according to the embodiments of the present disclosure (see FIG. 1). Except for Comparative Example 2, 30 products each with multiple strength levels were produced in coils to examine variations in mechanical properties of the products. Slabs with strength levels of 780 MPa, 980 MPa, and 1180 MPa were produced, and 10 steel sheets were produced for each of the three sheet thicknesses of 1.0 mm, 1.5 mm, and 2.0 mm at each strength level. These 10 slabs of each grade and thickness were all cast in different lots in a continuous casting machine. As a result, the chemical composition of each slab is varied and the transformation behavior is not uniform, although the slabs are within the production control range.

### [Table 1]

**(Table 1)**

| | Induction heating device Installation position | Transformation rate meter | Sheet thickness [mm] | Line speed [mpm] | Steel sheet temperature at exit of heating zone [°C] | First soaking zone | First induction heating device | |
|---|---|---|---|---|---|---|---|---|
| | | | | | | Residence time in recrystallization region [s] | Heating rate before adjustment | Heating rate after adjustment |
| Comparative Example 1 | Absent | Absent | 1.0, 1.5, 2.0 | 60 to 120 | 600 to 700 | 20 to 60 | - | - |
| Comparative Example 2 | Soaking zone entrance | Present (exit of soaking zone) | 1.0 | 120 | 650 | 3 | 20 [°C/s] | (No adjustment required) |
| Comparative Example 3 | Middle of soaking zone | Present (exit of soaking zone) | 1.0, 1.5, 2.0 | 60 to 120 | 600 to 700 | 20 to 60 | 5 [°C/s] | - |
| | | *Not used | | | | | *Below lower limit | |
| Comparative Example 4 | Middle of soaking zone | Present (exit of soaking zone) | 1.0, 1.5, 2.0 | 60 to 120 | 600 to 700 | 20 to 60 | 250 [°C/s] | - |
| | | *Not used | | | | | *Above upper limit | |
| Comparative Example 5 | Middle of soaking zone | Present (exit of soaking zone) | 1.0, 1.5, 2.0 | 60 to 120 | 600 to 700 | 70 | 20 [°C/s] | (No adjustment required) |
| | | | | | | * Above upper limit | | |
| Example 1 | Middle of soaking zone | Present (exit of soaking zone) | 1.0, 1.5, 2.0 | 60 to 120 | 600 to 700 | 20 to 60 | 20 [°C/s] | (No adjustment required) |
| Example 2 | Middle of soaking zone | Present (exit of soaking zone) | 1.0, 1.5, 2.0 | 60 to 120 | 600 to 700 | 20 to 60 | 10 [°C/s] | 20 [°C/s] |
| Example 3 | Middle of soaking zone and exit of | Present (exit of soaking zone) | 1.0, 1.5, 2.0 | 60 to 120 | 600 to 700 | 20 to 60 | 20 [°C/s] | (No adjustment required) |

### [Table 2]

**(Table 2)**

| | Second soaking zone | | Steel sheet temperature at entrance of cooling zone [°C] | Soaking time [s] | Grade | TS variation [MPa] | Remarks |
|---|---|---|---|---|---|---|---|
| | Temperature before adjustment [°C] | Temperature after adjustment [°C] | | | | | |
| Comparative Example 1 | - | - | 750 to 850 | 100 to 200 | 780 MPa | 775 to 900 | • Materials with unachieved mechanical properties present |
| | | | | | 980 MPa | 970 to 1100 | |
| | | | | | 1180 MPa | 1170 to 1300 | |
| Comparative Example 2 | 850 | (No adjustment required) | 780 to 820 | 60 | 780 MPa | - | • Calculations and laboratory experiments only |
| | | | | | 980 MPa | - | |
| | | | | | 1180 MPa | - | • Structure uncontrollable |
| Comparative Example 3 | 850 | - | 750 to 850 | 20 to 50 | 780 MPa | 750 to 830 | • Materials with unachieved mechanical properties present |
| | | | | | 980 MPa | 940 to 1000 | |
| | | | | | 1180 MPa | 1140 to 1220 | |
| Comparative Example 4 | 820 | - | 780 to 820 | 20 to 50 | 780 MPa | 790 to 850 | • Materials with unachieved mechanical properties present |
| | | | | | 980 MPa | 1000 to 1100 | |
| | | | | | 1180 MPa | 1190 to 1260 | |
| Comparative Example 5 | 850 | (No adjustment required) | 780 to 820 | 20 | 780 MPa | 720 to 780 | • Calculations and laboratory experiments only |
| | | | | | 980 MPa | 840 to 900 | |
| | | | | | 1180 MPa | 1080 to 1130 | • Structure uncontrollable |
| Example 1 | 850 | (No adjustment required) | 750 to 860 | 20 to 50 | 780 MPa | 785 to 805 | • No materials with unachieved mechanical properties |
| | | | | | 980 MPa | 985 to 1000 | |
| | | | | | 1180 MPa | 1185 to 1210 | |
| Example 2 | 850 to 970 | 850 | 760 to 870 | 20 to 50 | 780 MPa | 785 to 810 | • No materials with unachieved mechanical properties |
| | | | | | 980 MPa | 985 to 1010 | |
| | | | | | 1180 MPa | 1185 to 1220 | |
| Example 3 | 800 | (No adjustment required) | 760 to 870 | 20 to 50 | 780 MPa | 785 to 795 | • No materials with unachieved mechanical properties |
| | | | | | 980 MPa | 985 to 1000 | |
| | | | | | 1180 MPa | 1185 to 1200 | |

Each slab was subjected to hot rolling and pickling with conventional methods, optional annealing and cold rolling, and then annealing in a laboratory, subjected to heat treatment with conventional continuous annealing equipment and continuous annealing equipment according to the present disclosure, followed by cooling, cooling or plating treatment and other posttreatments. Tensile test pieces were taken from three arbitrary locations on the final product to determine the mechanical properties of the final product. Here, the tensile test piece was JIS (Japan Industrial Standards) No. 5. Tensile testing was performed according to JISZ2241. If a variation of tensile strength (TS) measured by a tensile test is ±30 MPa or less, the mechanical properties are stable, and if the variation is greater than ±30 MPa, the mechanical properties are considered to be variable. In other words, mechanical properties were considered stable if the range of TS variation was within a range ±30 MPa, that is, 60 MPa or less. In each of the 780 MPa, 980 MPa, and 1180 MPa grades, the required strength ranges are 780 MPa or more, 980 MPa or more, and 1180 MPa or more, respectively.

Comparative Example 1 was produced from the above-described material using a conventional annealing furnace comprising the pre-heating zone 5, the heating zone 6, and the soaking zone 7 (the first soaking zone 7A and the second soaking zone 7B in FIG. 1 are consecutive furnace lengths) without the first induction heating device 9 and the transformation rate meter 10 installed. Line speeds during production ranged from 60 mpm to 120 mpm, and changes in steel sheet temperature were controlled according to sheet thickness. The steel sheet temperature at the exit of the heating zone 6 (direct flame heating) was kept in the range of 600 °C to 700 °C to control surface redox reaction. The steel sheet was then introduced into a radiant tube soaking zone 7 for further heating, and the residence time in the recrystallization region was 20 seconds to 60 seconds. The heating/soaking time after the recrystallization region was 100 seconds to 200 seconds. The steel sheet temperature at the exit of the soaking zone 7 (entrance to the cooling zone 8) was in the range of 750 °C to 850 °C. The furnace temperature of the soaking zone 7 was controlled so that the steel sheet temperature at the exit was at the target value. Afterward, the final product was subjected to cooling, hot-dip galvanizing, alloying, etc., and material test pieces were then taken from the final product to investigate variations in mechanical properties. As a result, tensile strength varied greatly among each grade, with some falling below the lower limit for each grade. This is presumably because the phase fraction during annealing was not at the targeted value due to fluctuations in the chemical composition of the material, and that when annealing conditions changed at the joints between coils of different sheet thicknesses and grades, there were areas where the heating conditions could not keep up.

Comparative Example 2 is the result of numerical calculations and experiments using a cut sheet to investigate cases of rapid heating to the target annealing temperature at an entrance to the soaking zone 7. In Comparative Example 2, the residence time in the recrystallization region was very short, and the transformation from the α-phase to the γ-phase proceeded rapidly without recrystallization progressing. Therefore, the microstructure after cooling remained martensitic single-phase and no microstructure control could be achieved, cracking occurred, and the mechanical properties could not be measured.

In Comparative Example 3, induction heating equipment is provided in the middle of the soaking zone 7 of a conventional annealing furnace (at the same position as between the first soaking zone 7A and the second soaking zone 7B in FIG. 1). The sheet passing speed and the steel sheet temperature at the exit of the heating zone 6 were controlled within the same range as in Comparative Example 1. Although the first induction heating device 9 was installed, control was performed only with the steel sheet temperature as before, without feedback of the measured value of the transformation rate meter 10 to the output of the first induction heating device 9 and the furnace temperature. The resulting heating rate was 5 °C/s. The use of the highly responsive first induction heating device 9 and a smaller-sized soaking zone 7 improves the controllability of the steel sheet temperature and somewhat improves the variation in mechanical properties of the product but may not be as good as later-described examples. In addition, some material was unable to absorb variations due to the chemical composition of the material, and transformation to the γ-phase was insufficient, resulting in some material falling below the lower limit for mechanical properties.

Comparative Example 4 is similar to Comparative Example 3, with induction heating equipment installed in the middle of a conventional annealing furnace soaking zone 7. As in Comparative Example 3, the steel sheet temperature was controlled within the same range as in Comparative Example 1. When the heating rate of the first induction heating device 9 was set to 250 °C/s, some of the sheet edges had excessively large tensile strength, and some of the mechanical properties exceeded the acceptable range.

In Comparative Example 5, the phase fraction during annealing was measured by the transformation rate meter 10 at the exit of the soaking zone 7, and the output of the first induction heating device 9 and the furnace temperature of the soaking zone 7 were controlled. The first induction heating device 9 and the second soaking zone 7B were operating in the optimal range, and no adjustments were made. However, no optimization was performed to the sheet passing speed, and the residence time in the first soaking zone 7A was 70 seconds. This resulted in a coarsening of the α-grains, which caused areas where the strength of the final product was insufficient.

Example 1 is the result of producing products from the above-described material using the continuous annealing equipment of the present disclosure illustrated in FIG. 1. The sheet passing speed and the steel sheet temperature at the exit of the heating zone 6 were controlled within the same range as in Comparative Example 1. However, in Example 1, the phase fraction during annealing was measured by the transformation rate meter 10 at the exit of the soaking zone 7, and the output of the first induction heating device 9 and the furnace temperature of soaking zone 7 were controlled. As a result, the range of steel sheet temperatures at the entrance of the cooling zone 8 was larger than in Comparative Example 1, but the control based on phase fractions greatly improved the variation in mechanical properties of the product. There were no areas where the mechanical properties were below the lower limit.

Example 2 is a case in which the same control as in Example 1 was implemented, but the furnace temperatures of the first induction heating device 9 and the second soaking zone 7B were controlled, and the heating rate of the first induction heating device 9 and the temperature of the second soaking zone 7B were adjusted. After controlling the furnace temperatures within the optimal range, the mechanical properties of the product remained within the target range.

Example 3 is the result of production also using a supplementary second induction heating device installed between the exit of soaking zone 7 and the transformation rate meter 10 in the continuous annealing equipment. The second induction heating device was also used to control the phase fraction at the exit of the soaking zone 7 such that the variation in mechanical properties was smaller than in Example 1.

As described above, the configuration of the continuous annealing equipment, the continuous annealing method, the method of producing cold-rolled steel sheets and the method of producing coated or plated steel sheets according to the embodiments of the present disclosure enables a quick response to fluctuations in material properties and enables minimization of fluctuations in mechanical properties of products. In addition, the continuous annealing equipment according to the embodiments can be expected to reduce the installation cost of production equipment because the line length can be reduced compared to a conventional system.

Although the embodiments of the present disclosure have been described based on the drawings and examples, note that one skilled in the art can easily make various changes or modifications based on the present disclosure. Thus, note that these variations or modifications are included within the scope of this disclosure. For example, the functions included in each component or step can be re-arranged in a logically consistent manner, and multiple components or steps can be combined into one or divided. The embodiments pertaining to the present disclosure can also be implemented as a program executed by a processor provided with the device or as a storage medium storing the program. It should be understood that these cases are also included in the scope of this disclosure.

The above-described embodiments describe the continuous annealing equipment for steel sheets comprising, in this order, the pre-heating zone 5, the heating zone 6, and the soaking zone 7, but the continuous annealing equipment need not be equipped with the pre-heating zone 5. In the case of a configuration with no preheating zone 5, the above-described process in the pre-heating zone 5 may be performed in the heating zone 6.

In the above-described embodiments, the zinc pot 11 was described as a galvanizing tank in which thin steel sheets are immersed, but another coating or plating process may be performed. The coating or plating treatment may be, for example, electrogalvanizing, hot dip galvanizing treatment, or galvannealing.

For example, a processor of a process computer may read and execute a program stored in a storage part (e.g., memory) of the process computer to perform a process of predicting the mechanical properties of the final product from the material property prediction model, and a process of constructing the transformation rate control model and controlling the output of the first induction heating device 9 and the furnace temperature of the second soaking zone 7B such that the γ-phase fraction is within the target range. The material property prediction model and the transformation rate control model may be stored in the storage part of the process computer.

### REFERENCE SIGNS LIST

1 Payoff reel
2 Welder
3 Electrolytic cleaning device
4 Entry-side looper
5 Pre-heating zone
6 Heating zone
7 Soaking zone
7A First soaking zone
7B Second soaking zone
8 Cooling zone
8A First cooling zone
8B Second cooling zone
9 First induction heating device
10 Transformation rate meter
11 Zinc pot

## Claims

1. Continuous annealing equipment for steel sheets comprising a heating zone and a soaking zone in order of the heating zone and the soaking zone,
the soaking zone including a first soaking zone and a second soaking zone provided after the first soaking zone,
the continuous annealing equipment comprising:
a first induction heating device provided between the first soaking zone and the second soaking zone; and
a measuring device configured to measure austenite fractions of the steel sheets at an exit of the second soaking zone.

2. The continuous annealing equipment according to claim 1, further comprising a second induction heating device at the exit of the second soaking zone and before the measuring device.

3. The continuous annealing equipment according to claim 1 or 2, further comprising a hot dip galvanizing bath following the continuous annealing equipment for steel sheets comprising the heating zone and the soaking zone in order of the heating zone and the soaking zone.

4. A continuous annealing method performed with continuous annealing equipment for steel sheets comprising a heating zone and a soaking zone in order of the heating zone and the soaking zone,
the soaking zone including a first soaking zone and a second soaking zone provided after the first soaking zone,
the continuous annealing equipment comprising: a first induction heating device provided between the first soaking zone and the second soaking zone; and a measuring device configured to measure austenite fractions of the steel sheets at an exit of the second soaking zone,
wherein the continuous annealing method comprises a step of adjusting an output of the first induction heating device and adjusting a furnace temperature of the second soaking zone based on the austenite fractions of the steel sheets measured by the measuring device.

5. The continuous annealing method according to claim 4, wherein the step of adjusting the output of the first induction heating device and adjusting the furnace temperature of the second soaking zone uses a transformation rate control model constructed for each product.

6. A continuous annealing method performed with continuous annealing equipment for steel sheets comprising a heating zone and a soaking zone in order of the heating zone and the soaking zone,
the soaking zone including a first soaking zone and a second soaking zone provided after the first soaking zone,
the continuous annealing equipment comprising: a first induction heating device provided between the first soaking zone and the second soaking zone; and a measuring device configured to measure austenite fractions of the steel sheets at an exit of the second soaking zone,
wherein the continuous annealing method comprises a step of heating the steel sheets in the heating zone so that a temperature of each of the steel sheets increases in a temperature range lower than an Ai transformation temperature,
a step of maintaining the temperature of each of the steel sheets in a temperature range lower than the Ai transformation temperature at the first soaking zone,
the step of heating in the first induction heating device by 10 °C/s or more and 200 °C/s or less such that the temperature of each of the steel sheets is included in a temperature range of the Ai transformation temperature or more and less than an A₃ transformation temperature, and
a step of maintaining the temperature of each of the steel sheets in the second soaking zone in a temperature range of the Ai transformation temperature or more and less than the A₃ transformation temperature.

7. A method of producing cold-rolled steel sheets, wherein the continuous annealing method according to any one of claims 4 to 6 anneals the steel sheets which are cold-rolled steel sheets.

8. A method of producing coated or plated steel sheets, wherein a coating or plating treatment is applied to surfaces of the steel sheets annealed by the method of producing cold-rolled steel sheets according to claim 7, and
the coating or plating treatment is electrogalvanizing, hot dip galvanizing treatment, or galvannealing.
